# EUROPÄISCHE PATENTANMELDUNG

(11) **EP 4 067 323 A1**
(43) Veröffentlichungstag der Anmeldung: **05.10.2022**
(21) Anmeldenummer: 22161236.9
(22) Anmeldetag: 10.03.2022
(51) Int. Cl.: C04B 41/00, C04B 41/87

(54) **VERFAHREN ZUR FLUIDDICHTEN VERSIEGELUNG VON OBERFLÄCHEN VON BAUTEILEN, DIE AUS EINEM KERAMISCHEN FASERVERBUNDMATERIAL, BEI DEM KERAMISCHE FASERN ODER FASERN AUS KOHLENSTOFF IN EINER AUS KERAMISCHEM MATERIAL GEBILDETEN MATRIX DURCH VERSINTERUNG EINGEBETTET SIND, GEBILDET SIND**

(30) Priorität: 31.03.2021 DE 102021203254
(71) Anmelder: Fraunhofer-Gesellschaft zur Förderung der angewandten Forschung e.V., 80686 München (DE)
(72) Erfinder: Kunz, Willy, 01277 Dresden (DE); Mosch, Sindy, 01277 Dresden (DE); Vinnichenko, Mykola, 01277 Dresden (DE); Sauchuk, Viktar, 01277 Dresden (DE)
(74) Vertreter: Pfenning, Meinig & Partner mbB

(57) **Zusammenfassung**

Bei dem Verfahren zur fluiddichten Versiegelung von Oberflächen von Bauteilen, die aus einem keramischen Faserverbundmaterial, bei dem keramische Fasern oder Fasern aus Kohlenstoff in einer aus keramischem Material gebildeten Matrix durch Versinterung eingebettet sind, gebildet sind, werden die zu versiegelnden Oberflächenbereiche mit einer Suspension beschichtet und der so beschichtete Oberflächenbereich mit elektromagnetischer Strahlung einer Wellenlänge oder eines Wellenlängenbereichs so bestrahlt, dass Partikel der Suspension schmelzflüssig werden und flüssige Phase aus der Suspension in Poren an der Oberfläche des Faserverbundmaterials infiltriert und nach dem Erstarren der flüssigen Phase die Versiegelung der Oberfläche erreicht wird, wobei in der Suspension Partikel enthalten sind, die eine um mindestens 3 %, bevorzugt mindestens 10 % höhere Absorption für die eingesetzte elektromagnetische Strahlung aufweisen, als das keramische Verbundfasermaterial diese elektromagnetische Strahlung absorbiert.

## Beschreibung

Die Erfindung betrifft ein Verfahren zur fluiddichten Versiegelung von Oberflächen von Bauteilen, die aus einem keramischen Faserverbundmaterial, bei dem keramische Fasern oder Fasern aus Kohlenstoff in einer aus keramischem Material gebildeten Matrix durch Versinterung eingebettet sind, gebildet sind.

Keramische Faserverbundwerkstoffe (CMC: Ceramic Matrix Composite) besitzen in den meisten Fällen eine gewisse offene Porosität. Bei insbesondere oxidischen Verbundwerkstoffen (OCMC: Oxide Ceramic Matrix Composite) ist diese besonders ausgeprägt vorhanden. Das führt dazu, dass Anwendungen verhindert werden, bei denen größere Druckunterschiede herrschen (Auskleidung von Gasturbinen) oder Fluide (Gase, Flüssigkeiten, Dämpfe, Aerosole) durch entsprechende Bauteile geführt oder vorgehalten werden können (Chemieindustrie). Aus diesem Grund ist eine Versiegelung der Oberfläche solcher Werkstoffe zur Erweiterung des Anwendungsspektrums notwendig, so dass die versiegelte Oberfläche fluiddicht ist.

Bisher war die Nutzung von CMC (diese haben eine inhärent offene Porosität) größtenteils auf Bereiche mit niedrigen Druckunterschieden (Brenner für Öfen; Heißgasführung in Gasturbinen; Düsen für kleinere Drohnen) beschränkt. In Hinblick auf die Führung von Fluiden (Flüssigkeiten, Gase oder Gemische davon) werden diese Werkstoffe bisher im Bereich metallischer Schmelzen eingesetzt, die aufgrund ihres Benetzungsverhaltens nicht in die Porosität zumindest nicht ausreichend eindringen und Poren verschließen können, um eine ausreichend dichte Versiegelung zu erreichen.

Zum Schutz von Bauteilen aus CMC in korrosiven Umgebungen (bspw. Heißgas in Gasturbinen) wurden verschiedene Versuche unternommen, um Schichten aufzubringen, die das Einwirken von Fluiden verhindern sollen. Je nach Beschichtungsverfahren und -material werden dabei unterschiedliche Schichttypen erreicht. Die entscheidende Gemeinsamkeit solcher Schichten besteht aber in der hohen Anfälligkeit gegenüber Rissbildung und Abplatzen. Dies kann nach mehreren thermischen Wechselzyklen oder bereits nach dem Auftragen der Schichten erfolgen. Bei Auftreten entsprechender Defekte wird die Bauteilfunktion direkt oder zumindest die Lebensdauer maßgeblich beeinträchtigt.

Bei den herkömmlich eingesetzten thermischen Verfahren zum Beschichten kommt es auch zu einer temperaturbedingten Degradation des CMC-Materials, die zu einer wesentlichen Verschlechterung seiner Eigenschaften führt.

Es ist daher Aufgabe der Erfindung, Möglichkeiten anzugeben, mit denen eine dauerhaft haftfeste, rissfreie fluiddichte Versiegelung an Oberflächen von Bauteilen, die aus einem CMC-Material bestehen, erreicht werden kann, ohne dass eine Schädigung des CMC-Materials aufritt.

Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in abhängigen Ansprüchen bezeichneten Merkmalen realisiert werden.

Bei dem erfindungsgemäßen Verfahren werden die zu versiegelnden Oberflächenbereiche mit einer Suspension beschichtet. Der so beschichtete Oberflächenbereich wird mit elektromagnetischer Strahlung einer Wellenlänge oder eines Wellenlängenbereichs so bestrahlt, dass Partikel der Suspension schmelzflüssig werden und flüssige Phase aus der Suspension in Poren an der Oberfläche des Faserverbundmaterials infiltriert und nach dem Erstarren der flüssigen Phase die Versiegelung der Oberfläche erreicht wird.

Um dies zu erreichen sind in der Suspension Partikel enthalten, die eine um mindestens 3 %, bevorzugt mindestens 10 % höhere Absorption für die eingesetzte elektromagnetische Strahlung aufweisen, als das keramische Verbundfasermaterial diese elektromagnetische Strahlung absorbiert.

Dabei müssen nicht alle in der Suspension enthaltenen Partikel oder chemischen Elemente bzw. chemischen Verbindungen mit denen Partikel gebildet sind, diese Eigenschaft aufweisen. Es kann sich daher um ein Partikelgemisch oder um Partikel handeln, die mit einem entsprechenden Gemisch chemischer Elemente und/oder chemischer Verbindungen gebildet sind.

Es kann insbesondere ein keramisches Faserverbundmaterial eingesetzt werden, das mit Fasern, die ausgewählt sind aus Al₂O₃, Al₂O₃ und SiO₂, ZrO₂, SiCN, Si₃N₄ und C und die Matrix mit Al₂O₃, Al₂O₃ und SiO₂, ZrO₂, SiC, Si₃N₄ und/oder Si gebildet ist. Die Fasern sind üblicherweise mit einem die Matrix bildenden Pulver miteinander versintert.

Bevorzugt sollte elektromagnetische Strahlung aus dem Wellenlängenbereich des Nahinfrarot (NIR)- und/oder Infrarot (IR)-Spektrums eingesetzt werden. Es kann sich dabei um monochromatische, wie auch um elektromagnetische Strahlung mehrerer Wellenlängen innerhalb dieses Wellenlängenbereichs handeln. Dabei können einzelne Wellenlängen ausgewählt werden, die von bestimmten chemischen Verbindungen oder chemischen Elementen, die in Partikeln enthalten sind oder mit denen Partikel gebildet sind, besonders gut absorbiert und daher weit besser absorbiert werden, als dies beim CMC-Material, mit dem das Bauteil gebildet ist, mit der jeweiligen elektromagnetischen Strahlung erreichbar ist. Das CMC-Material erreicht daher wesentlich kleinere Temperaturen als zumindest die gebildete flüssige Phase, mit der die Versiegelung ausgebildet wird. Durch die so mit der elektromagnetischen Strahlung erreichte Erwärmung, der diese elektromagnetische Strahlung absorbierenden Partikel, erfolgt dort eine Emission elektromagnetischer Strahlung in einem breiteren Wellenlängenbereich als der für die Bestrahlung eingesetzten elektromagnetischen Strahlung. Dadurch kann auch elektromagnetische Strahlung durch das CMC-Material absorbiert werden. Der Anteil dieser absorbierten elektromagnetischen Strahlung ist jedoch geringer und der Zeitraum der Emission ist kürzer, als der Einwirkzeitraum der primär eingesetzten elektromagnetischen Strahlung.

Auch die Wärmeleitung spielt eine Rolle. Aber aufgrund der kurzen Bearbeitungszeit (Millisekunden) diffundiert die Wärme je nach den thermischen Eigenschaften des Substratmaterials nur wenige µm oder einige zehn µm. Die durch die vom Laser emittierte elektromagnetische Strahlung beheizte Schicht wirkt in diesem Fall selbst als Wärmequelle.

Dabei kann die Bestrahlung und das Überführen in die flüssige Phase in einem relativ kleinen Zeitraum erreicht werden (auf der Zeitskala von Millisekunden), so dass ein kritischer Temperaturwert am CMC-Material bis zum Abschluss der Infiltration und dem Erstarren der flüssigen Phase nicht erreicht wird.

In der Suspension sollte eine ausreichend große Menge an Partikeln oder in Partikeln ein ausreichend großer Anteil eines chemischen Elements und/oder chemischen Verbindung enthalten sein, mit dem gewährleistet werden kann, dass eine ausreichend große Menge an festem Material der Suspension in die flüssige Phase zur Ausbildung der Versiegelung überführt werden kann und trotzdem das CMC-Material thermisch temperaturbedingt nicht geschädigt wird.

Beispiele für bei der Erfindung in der Suspension eingesetzte Partikel können nachfolgender Tabelle entnommen werden.

| | Matrixbildner | | | | Zuzugebende Partikel mit höherer Absorption | |
|---|---|---|---|---|---|---|
| Nr. | Al₂O₃ [Masse-%] | SiO₂ Masse-%] | Y₂O₃ [Masse-%] | MgO [Masse-%] | ZrC [Vol.-%] | SiC [Vol.-%] |
| 1 | 60 | 30 | 10 | | | |
| 2 | 20 | 60 | | 20 | | 10 |
| 3 | | 40 | 60 | | | 10 |
| 4 | 23 | 45 | 32 | | | 5 |
| 5 | 64 | | 36 | | 5 | |

Vorteilhaft sollte die Bestrahlung großflächig mit einer Reihen- oder Reihen- und Spaltenanordnung von bevorzugt Diodenlasern als Strahlungsquelle durchgeführt werden.

Vorteilhaft kann eine zumindest eindimensionale Relativbewegung von Faserverbundbauteil mit seiner zu versiegelnden Oberfläche und Strahlungsquelle durchgeführt werden, um die gesamte gewünschte Oberfläche zu versiegeln. Die Bestrahlung der mit der Suspension beschichtenden Oberfläche kann bei einer Relativbewegung mit einer Vorschubbewegungsgeschwindigkeit oder intermittierend durchgeführt werden, so dass im jeweils bestrahlten Oberflächenbereich eine Überführung mindestens einer festen Komponente in die flüssige Phase erfolgen kann, die in der Suspension enthalten ist.

Bei der Erfindung soll also gezielt ausgenutzt werden, dass elektromagnetische Strahlung nur zu geringen Anteilen in das eigentlich an der Oberfläche zu versiegelnde CMC-Material, mit dem das Bauteil gebildet ist, einkoppelt und dieses entsprechend weniger erwärmt wird. Es wird dazu ein Beschichtungsmaterial aufgetragen, das in seiner Zusammensetzung derart modifiziert ist, dass eine stärkere Einkopplung der Strahlungsenergie erfolgt und ein Erhitzen eines festen in der Suspension enthaltenen Materials bis zu dessen Aufschmelzen erreicht werden kann. Da nicht alle festen Bestandteile der Suspension in die flüssige Phase übergehen und nicht Bestandteil der fluiddichten Versiegelung werden müssen, kann es erforderlich sein, diese noch festen an der Oberfläche anhaftenden Partikel zu entfernen. Dazu können diese Partikel bei Bedarf z.B. abgebürstet, abgekratzt, abgeschabt oder abgeschliffen werden.

Vorteilhafterweise infiltriert das aufgeschmolzene Beschichtungsmaterial in das poröse zu beschichtende CMC-Material partiell oder vollständig. Dadurch können eine form- und stoffschlüssige Anbindung des Versiegelungsmaterials erreicht, die Rissbildung effektiv minimiert und ein Abplatzen verhindert werden.

Das zur Versiegelung eingesetzte Material sollte mindestens eine Komponente mit einem Anteil enthalten mit dem eine deutlich höhere Absorption bei der/den genutzten Wellenlänge(n) erreichbar ist. Der Anteil sollte bevorzugt im Bereich zwischen 0,1 % bis 50 % gehalten sein.

Bei der Erfindung sollte die Suspension mittels Sprühen, Streichen, Sieb-, Tampondruck, Eintauchen, Tintenstrahldruck, Rakelbeschichtung, Dispenserdruck oder einer anderen berührenden oder berührungslosen Drucktechnologie auf die jeweilige Oberfläche aufgebracht werden.

Die Bestrahlung sollte über einen Zeitraum von 10 ms bis 50 ms, bevorzugt 20 ms bis 30 ms pro jeweiliger Fläche durchgeführt werden.

Die Kombination von Suspensionsauftrag und Bestrahlung führt zu einem selektiven Aufschmelzen von festem Suspensionsmaterial und zu einer zumindest teilweisen Infiltration des porösen CMC-Materials ausgehend von der beschichteten Oberfläche in den Randschichtbereich hinein.

Die eingesetzte Suspension kann in ihrer Konsistenz mit Partikeln, Flüssigkeit und ggf. Dispergier- und/oder Bindemittel eine Paste, Tinte oder Aufschlämmung bilden. Partikel sollten mit einer mittleren Partikelgröße d₅₀ im Bereich von 0,1 µm - 80 µm eingesetzt werden.

Die thermische Behandlung der Suspension, die zur Infiltration und letztendlich zur Versiegelung der jeweiligen Oberfläche führt, kann an Luft, im Vakuum oder innerhalb einer Schutzgasatmosphäre unter Einsatz der jeweiligen elektromagnetischen Strahlung durchgeführt werden. Es können Laser, Diodenlaser, mikrooptisch optimierte Diodenlaser-Arrays oder Blitzlampen eingesetzt werden.

Mit einem linienförmigen oder rechteckigen Brennfleck, mit dem die jeweilige Oberfläche gleichzeitig bestrahlt werden kann, können große Oberflächenbereiche kontinuierlich zumindest nahezu kontinuierlich bearbeitet werden, was besonders für das Upscaling des Produktionsprozesses relevant ist.

Die Realisierung solcher Versiegelungsschichten konnte erstmals mittels Siebdruck eine auf Y₂O₃-SiO₂-SiC basierenden Paste als Suspension auf einem Al₂O₃-Faser-CMC-Materialbauetil demonstriert werden. Nach dem Druck der Suspension auf die jeweilige Bauteiloberfläche erfolgte ein Schmelzen fester Partikel an Luft mit einem mikrooptisch optimierten Diodenlaserarray, das elektromagnetische Strahlung im nahen Infrarotbereich emittierte. Der besondere Vorteil dieses Ansatzes liegt darin, dass die mit der Suspension beschichtete größere Oberfläche des Bauteils gleichzeitig mit elektromagnetischer Strahlung beaufschlagt wird, die nicht von einer einzelnen Strahlungsquelle, wie einem einzelnen Laser emittiert worden ist. Für die gleichzeitige Bestrahlung können mehrere Laserstrahlquellen, insbesondere in einer Reihenanordnung, einer Reihen- und Spaltenanordnung (Arrayanordnung) besonders vorteilhaft von Laserdioden als Strahlungsquelle eingesetzt werden, wodurch linien- oder rechteckförmig bestrahlte Oberflächen mit hoher Intensität und Fluenz erhalten werden können.

Das CMC-Material mit dem das Bauteil gebildet ist, kann an Oberflächen versiegelt werden, ohne dass die Materialeigenschaften durch thermischen Einfluss beeinträchtigt werden. Der Vorteil besteht darin, dass aggressive Gase und Flüssigkeiten nicht in das CMC-Material eindringen bzw. es nicht durchdringen können und somit entsprechende Anwendungen (Führung von heißen Gasen bei höheren Drücken und von aggressiven Flüssigkeiten) ermöglicht werden.

Die Erfindung kann beispielsweise für die Herstellung von Turbinenteilen und Antriebstechnikelementen (Brennkammer, Verkleidungen, ...), in der Ofentechnologie, der chemischen Verfahrenstechnik, insbesondere für Leitungen, Gehäuse oder Reaktoren eingesetzt werden.

Nachfolgend soll die Erfindung anhand von Beispielen näher erläutert werden.

Beispiel:
CMC-Material: Al₂O₃-Fasern mit Al₂O₃+ZrO₂-Matrix
Beschichtungsmaterial: 60 Masse-% Y₂O₃ + 40 Masse-% SiO2
Zugegebene Partikel höherer Absorption: 10 Vol.-% SiC
Beschichtungsverfahren: Siebdruck

Laserparameter:
In diesem konkreten Beispiel wurden die siebgedruckten Schichten getrocknet und anschließend einer NIR-Diodenlaser-Array-Bearbeitung unterzogen. Die Konfiguration, bei der die Strahlung des Diodenlaser-Arrays in einem linienförmigen Strahlbrennfleck auf die Probenoberfläche fokussiert und die Probe mit kontinuierlicher Geschwindigkeit unter dem Strahlbrennfleck hindurchbewegt wurde, wurde verwendet. Bei dieser Verarbeitungsmethode wurde beobachtet, dass es möglich ist, die Versiegelungsbeschichtung mit dem Auffüllen der Poren auf der CMC-Oberfläche zu schmelzen, ohne das keramische Matrixmaterial zu beschädigen. Die besten Ergebnisse wurden mit einer optischen Intensität des Diodenlaser-Arrays im Bereich von 5 kW/cm² - 9 kW/cm² und einer Verweilzeit im Bereich von 20 ms -30 ms erzielt (entsprechende Probenverschiebegeschwindigkeit von 0,2 m/min - 0,3 m/min).

Dabei zeigen:

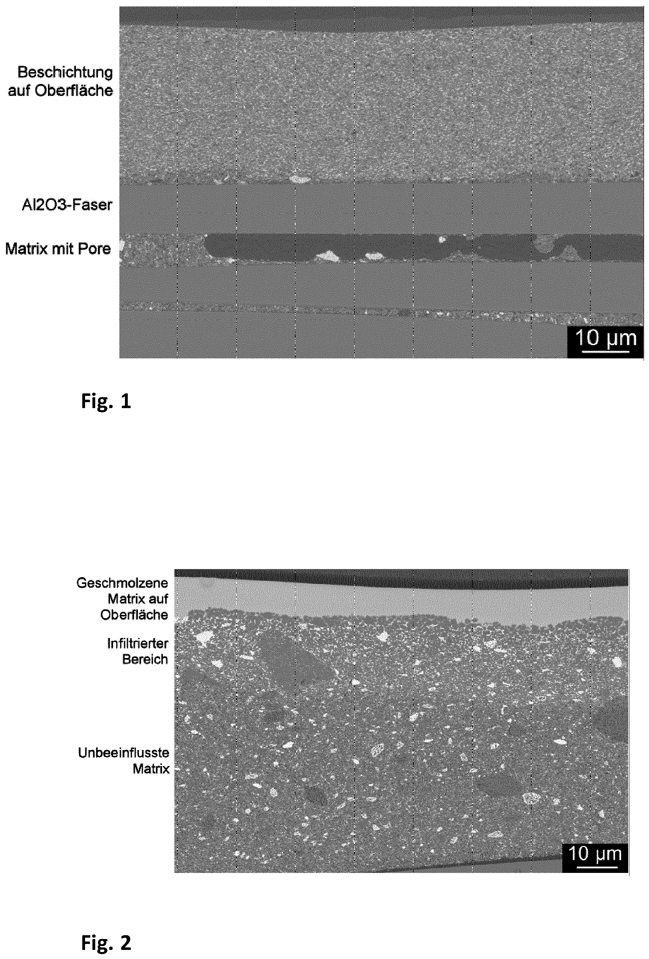

- Figur 1: den Zustand vor Laserbeaufschlagung und
- Figur 2: Zustand nach Laserbeaufschlagung in Form von Schliffbildern.

## Patentansprüche

1. Verfahren zur fluiddichten Versiegelung von Oberflächen von Bauteilen, die aus einem keramischen Faserverbundmaterial, bei dem keramische Fasern oder Fasern aus Kohlenstoff in einer aus keramischem Material gebildeten Matrix durch Versinterung eingebettet sind, gebildet sind, bei dem
die zu versiegelnden Oberflächenbereiche mit einer Suspension beschichtet werden und der so beschichtete Oberflächenbereich mit elektromagnetischer Strahlung einer Wellenlänge oder eines Wellenlängenbereichs so bestrahlt wird, dass Partikel der Suspension schmelzflüssig werden und flüssige Phase aus der Suspension in Poren an der Oberfläche des Faserverbundmaterials infiltriert und nach dem Erstarren der flüssigen Phase die Versiegelung der Oberfläche erreicht wird, wobei
in der Suspension Partikel enthalten sind, die eine um mindestens 3 %, bevorzugt mindestens 10 % höhere Absorption für die eingesetzte elektromagnetische Strahlung aufweisen, als das keramische Faserverbundmaterial diese elektromagnetische Strahlung absorbiert.

2. Verfahren nach Anspruch 1, **dadurch gekennzeichnet, dass** ein keramisches Faserverbundmaterial eingesetzt wird, das mit Fasern, die ausgewählt sind aus Al₂O₃, Al₂O₃ und SiO₂, ZrO₂, SiCN, Si₃N₄ und C und die Matrix mit Al₂O₃, Al₂O₃ und SiO₂, ZrO₂, SiC, Si₃N₄ und/oder Si gebildet ist.

3. Verfahren nach einem der vorhergehenden Ansprüche, **dadurch gekennzeichnet, dass** elektromagnetische Strahlung aus dem Wellenlängenbereich des NIR- und/oder IR-Spektrums eingesetzt wird.

4. Verfahren nach einem der vorhergehenden Ansprüche, **dadurch gekennzeichnet, dass** die Bestrahlung großflächig mit einer Reihen- oder Reihen- und Spaltenanordnung von Diodenlasern als Strahlungsquelle durchgeführt wird.

5. Verfahren nach einem der vorhergehenden Ansprüche, **dadurch gekennzeichnet, dass** die Bestrahlung großflächig durch Rasterung einer punktförmigen Laserquelle erfolgt.

6. Verfahren nach einem der vorhergehenden Ansprüche, **dadurch gekennzeichnet, dass** eine zumindest eindimensionale Relativbewegung von Faserverbundbauteil mit seiner zu versiegelnden Oberfläche und Strahlungsquelle durchgeführt wird.

7. Verfahren nach einem der vorhergehenden Ansprüche, **dadurch gekennzeichnet, dass** die Suspension durch Sprühen, Streichen, Sieb-, Tampondruck, Eintauchen oder Dispenserdruck auf die jeweilige Oberfläche aufgebracht wird.

8. Verfahren nach einem der vorhergehenden Ansprüche, **dadurch gekennzeichnet, dass** die Bestrahlung der mit der Suspension beschichtenden Oberfläche bei einer Relativbewegung mit einer Vorschubbewegungsgeschwindigkeit oder intermittierend durchgeführt wird, so dass eine Überführung mindestens einer festen Komponente in die flüssige Phase erfolgen kann, die in der Suspension enthalten ist.

9. Verfahren nach einem der vorhergehenden Ansprüche, **dadurch gekennzeichnet, dass** die die Bestrahlung über einen Zeitraum im Bereich 10 ms bis 50 ms pro Flächeneinheit durchgeführt wird.
